# EUROPÄISCHE PATENTSCHRIFT

(11) **EP 2 110 097 B1**
(45) Veröffentlichungstag und Bekanntmachung des Hinweises auf die Patenterteilung: **18.05.2011**
(21) Anmeldenummer: 09003019.8
(22) Anmeldetag: 03.03.2009
(51) Int. Cl.: A61C 3/02, A61C 8/00

(54) **Dentalinstrument zur einmaligen Verwendung**
Single-use dental instrument
Instrument dentaire destiné à une utilisation unique

(30) Priorität: 16.04.2008 DE 102008019139; 25.04.2008 DE 202008005767 U
(43) Veröffentlichungstag der Anmeldung: 21.10.2009
(73) Patentinhaber: Gebr. Brasseler GmbH & Co. KG, D-32657 Lemgo (DE)
(72) Erfinder: Danger, Karl-Heinz, 32758 Detmold (DE); Luhmann, Ingo, 32657 Lemgo (DE)
(74) Vertreter: Weber, Joachim

(56) Entgegenhaltungen:
- EP-A- 1 582 171
- EP-A- 1 941 838
- DE-A1- 3 722 368
- DE-A1-102005 011 917
- DE-C- 479 375
- US-A1- 2004 193 104

## Beschreibung

Die Erfindung bezieht sich auf ein Dentalinstrument mit den Merkmalen des Oberbegriffs des Patentanspruchs.

Im Einzelnen bezieht sich die Erfindung auf ein Dentalinstrument mit einem mit zumindest einer Schneide versehenen Kopf sowie mit einem in einer Antriebsvorrichtung einspannbaren Schaft.

Bei Dentalinstrumenten stellt sich die Problematik, dass diese grundsätzlich mehrfach verwendbar sind. Nach einem Einsatz bei einem Patienten werden die Dentalinstrumente gereinigt und anschließend sterilisiert. Dieser Vorgang kann insbesondere bei aus Metall bestehenden Dentalinstrumenten grundsätzlich beliebig oft wiederholt werden, wobei lediglich die Schnittleistung der Schneiden bzw. deren Schärfe die Einsatzdauer begrenzt.

Für bestimmte Einsatzzwecke ist es jedoch wünschenswert, sogenannte Einpatienteninstrumente zu verwenden, beispielsweise Einpatientenbohrer für die Implantatbettaufbereitung. Bei derartigen Einpatienteninstrumenten, welche nur einmal bei einem einzigen Patienten zur Anwendung gelangen sollen, sollte somit sichergestellt werden, dass eine Mehrfachverwendung durch den Zahnarzt nicht möglich ist.

Zum Stand der Technik wird auf die DE 10 2005 011 917 B4 verwiesen.

Einen weiteren Stand der Technik zeigt die EP 1 582 171 A1. Dort ist ein Dentalinstrument in Form eines Wurzelkanalinstruments beschrieben, bei welchem am Endbereich eines dünnen, metallischen Schaftes eine Kunststoffmanschette vorgesehen ist, die zur Einspannung in eine Antriebseinrichtung dient. Der Kunststoff verformt sich bei der Sterilisation in einem Autoklaven, so dass das Dentalinstrument nicht mehr in ein Winkelstück eingesetzt werden kann bzw. eine Führung zwischen dem Dentalinstrument und dem Winkelstück nicht mehr gewährleistet ist. Alternativ zeigt der Stand der Technik, die Kunststoffmanschette ohne metallischen Kern herzustellen oder mit einem Flüssigkeitsreservoir zu versehen, welches ein weiteres Aufquellen oder Aufplatzen zur Durchmesseränderung bewirkt. Dem gleichen Zweck dient ein hydrophiler Ring, welcher ebenfalls zu einer Durchmesservergrößerung führt. Weiterhin sind Klebeverbindungen zwischen dem Schaft und einem Anschlussteil vorgesehen, welche sich bei der Sterilisation bzw. in einem Autoklaven lösen.

Die DE-A-37 22 368 beschreibt ein medizinisches Handinstrument mit einem als Arbeitsteil ausgebildeten Kopf und einem mit dem Kopf verbundenen Schaft, wobei diese mittels eines Klebers verbunden sind, der sich bei einer vorgegebenen Temperatur verflüssigt.

Der Erfindung liegt die Aufgabe zugrunde, ein Dentalinstrument der eingangs genannten Art zu schaffen, welches bei einfachem Aufbau und einfacher, kostengünstiger Herstellbarkeit eine Mehrfachverwendung ausschließt.

Erfindungsgemäß wird die Aufgabe durch die Merkmale der unabhängigen Ansprüche gelöst, der abhängige Anspruch zeigt eine weitere vorteilhafte Ausgestaltung der Erfindung.

Durch die erfindungsgemäß vorgesehene Formänderung ist sichergestellt, dass das Dentalinstrument bei Erreichen der Sterilisationstemperatur sich so verformt, dass es nicht mehr verwendbar ist.

Im Gegensatz zu den aus dem Stand der Technik bekannten Dentalinstrumenten, bei welchen keine Einspannung in ein Winkelstück oder in eine Antriebseinheit mehr möglich ist, sofern eine vorgegebene Temperatur (Sterilisationstemperatur) überschritten wurde, verändert sich das erfindungsgemäße Dentalinstrument hinsichtlich seiner Form so, dass das Dentalinstrument nicht mehr verwendbar ist. Bei der Erfindung ist vorgesehen, dass sich die Formänderung des Dentalinstruments dadurch ergibt, dass der Schaft aus einer Memorylegierung oder einem Material mit Memory-Eigenschaften gefertigt ist. Hierbei kann der Schaft aus NiTi, aus Stahl oder aus Kunststoff bestehen. Der Schaft wird in üblicher Weise in den Kopf (Arbeitsteil) eingeklebt. Wird nunmehr das Dentalinstrument sterilisiert oder einem Autoklav-Prozess ausgesetzt, so verliert der Schaft seine vorgegebene Form und kehrt in die Ursprungsform zurück, welche beispielsweise leicht gebogen ist, so dass das Dentalinstrument nicht mehr verwendbar ist.

Der Schaft kann erfindungsgemäß, wie erwähnt, aus einem Kunststoffmaterial bestehen, insbesondere einem "Shape-Memory-Kunststoff". Ein derartiges Kunststoffmaterial dehnt sich bei Erwärmung beispielsweise aus oder verformt/verbiegt sich, so dass sich der Durchmesser des Schaftes vergrößert und dieser somit nicht mehr in ein Winkelstück oder in eine Antriebseinheit passt.

Im Folgenden wird die Erfindung anhand von Ausführungsbeispielen in Verbindung mit der Zeichnung beschrieben. Dabei zeigt:
- Fig. 1: eine vereinfachte Seiten-Teilschnittansicht eines ersten Ausführungs- beispiels der Erfindung, und
- Fig. 2: eine Seitenansicht eines Ausführungsbeispiels mit einem Schaft aus einer Memory-Legierung.

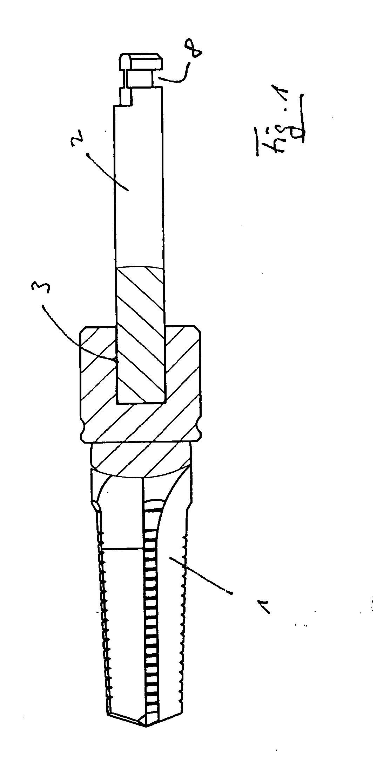

Das erfindungsgemäße Dentalinstrument umfasst einen Kopf 1, welcher als Arbeitsteil ausgebildet ist und mit zumindest einer Schneide versehen ist. An seinem rückwärtigen Endbereich umfasst der Kopf 1 eine zentrische Ausnehmung 3, in welche ein stiftartiger Schaft 2 eingeklebt ist (Fig. 1).

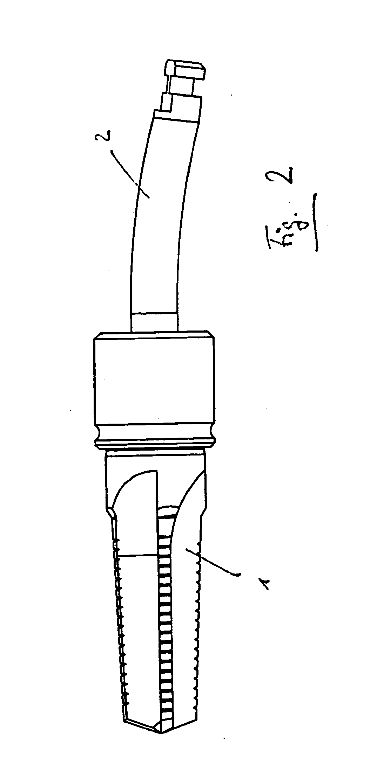

Bei dem in den Fig. 1 und 2 gezeigten Ausführungsbeispiel ist der Schaft aus einer Memory-Legierung gefertigt, welche bei Erreichen einer vorgegebenen Temperatur ihre ursprüngliche nicht-gerade Form wiederfindet, so dass das Dentalinstrument nicht mehr verwendbar ist.

### Bezugszeichenliste

- 1: Kopf
- 2: Schaft
- 3: Zentrische Ausnehmung
- 8: Arretierungsnut

## Patentansprüche

1. Dentalinstrument mit einem als Arbeitsteil ausgebildeten Kopf (1) und einem mit dem Kopf (1) verbundenen Schaft (2), wobei das Dentalinstrument bei Überschreiten einer vorgegebenen Temperatur eine Formänderung erfährt, **dadurch gekennzeichnet, dass** der Schaft (2) aus einer sich bei Erreichen der vorgegebenen Temperatur verformenden Memory-Legierung gefertigt ist.

2. Dentalinstrument mit einem als Arbeitsteil ausgebildeten Kopf (1) und einem mit dem Kopf (1) verbundenen Schaft (2), wobei das Dentalinstrument bei Überschreiten einer vorgegebenen Temperatur eine Formänderung erfährt, **dadurch gekennzeichnet, dass** der Schaft (2) aus einem sich beim Überschreiten der vorgegebenen Temperatur verformenden Kunststoffmaterial, das einen Memory-Effekt aufweist, gefertigt ist.

3. Dentalinstrument nach Anspruch 1 oder 2, **dadurch gekennzeichnet, dass** die Temperatur eine Sterilisationstemperatur ist.

## Claims

1. A dental instrument comprising a head (1) formed as a working part and a shaft (2) connected to the head (1), wherein the dental instrument experiences a change of shape upon exceeding a predetermined temperature, **characterized in that** the shaft (2) is made of a memory alloy deforming upon reaching the predetermined temperature.

2. A dental instrument comprising a head (1) formed as a working part and a shaft (2) connected to the head (1), wherein the dental instrument experiences a change of shape upon exceeding a predetermined temperature, **characterized in that** the shaft (2) is made of a plastics material deforming upon reaching the predetermined temperature, the material having a memory effect.

3. The dental instrument of claim 1 or claim 2, **characterized in that** the temperature is a sterilization temperature.

## Revendications

1. Instrument dentaire ayant une tête (1) réalisée sous la forme d'une pièce de travail et une tige (2) reliée à la tête (1), dans lequel l'instrument dentaire subit une modification de forme en cas du dépassement d'une température prédéterminée, **caractérisé en ce que** la tige (2) est fabriquée à partir d'un alliage mémoire changeant de forme à l'atteinte de la température prédéterminée.

2. Instrument dentaire ayant une tête (1) réalisée sous la forme d'une pièce de travail et une tige (2) reliée à la tête (1), sachant que l'instrument dentaire subit une modification de forme en cas du dépassement d'une température prédéterminée, **caractérisé en ce que** la tige (2) est fabriquée en un matériau de matière synthétique changeant de forme en cas de dépassement de la température prédéterminée, lequel matériau présente un effet mémoire.

3. Instrument dentaire selon la revendication 1 ou 2, **caractérisé en ce que** la température est une température de stérilisation.
